Europäisches Patentamt

European Patent Office

Office européen des brevets

(19)

(11) **EP 1 063 780 A2**

(12) **EUROPEAN PATENT APPLICATION**

(43) Date of publication:
   **27.12.2000 Bulletin 2000/52**

(51) Int Cl.$^7$: **H04B 1/707**, H04J 13/04

(21) Application number: **00304702.4**

(22) Date of filing: **02.06.2000**

(84) Designated Contracting States:
   **AT BE CH CY DE DK ES FI FR GB GR IE IT LI LU MC NL PT SE**
   Designated Extension States:
   **AL LT LV MK RO SI**

(30) Priority: **02.06.1999 US 137197 P**
   **07.07.1999 US 142837 P**
   **07.07.1999 US 142858 P**

(71) Applicant: **Texas Instruments Incorporated**
   **Dallas, TX 75251 (US)**

(72) Inventors:
   • **Schmidl, Timothy**
     **Dallas, Texas 75251 (US)**
   • **Dabak, Anand G.**
     **Plano, Texas 75025 (US)**

(74) Representative:
   **Legg, Cyrus James Grahame et al**
   **ABEL & IMRAY,**
   **20 Red Lion Street**
   **London WC1R 4PQ (GB)**

(54) **Spread spectrum channel estimation sequences**

(57) Code division multiple access channel estimation sequences generated by a base station plus user-specific code (e.g., 16 chips) modulating a sequence of pilot symbols (e.g., 16 symbols to yield a sequence of 256 chips) with different users having differing pilot symbol sequences. A hierarchical (Fig.6) structure can efficiently compute the delay profile and channel estimations of multiple users.

FIG. 1

**Description**

CROSS-REFERENCE TO RELATED APPLICATIONS

This application claims priority from the following provisional applications: serial Nos. 60/137,197, filed 06/02/99, and 60/142,837 and 60/142,858, both filed 07/07/99.

BACKGROUND OF THE INVENTION

1. Field of the invention

The invention relates to digital communications, and more particularly to spread spectrum communications and related systems and methods.

2. Background

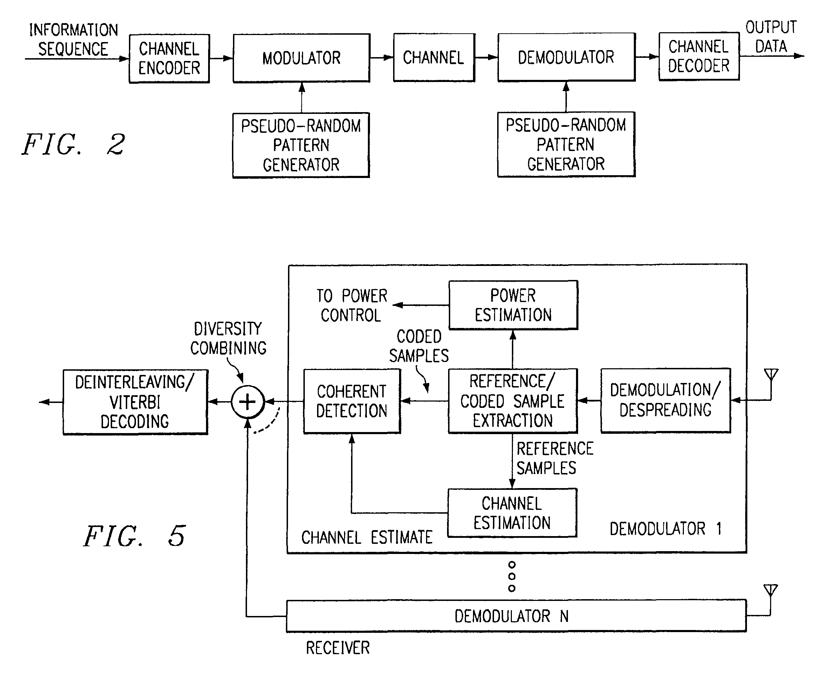

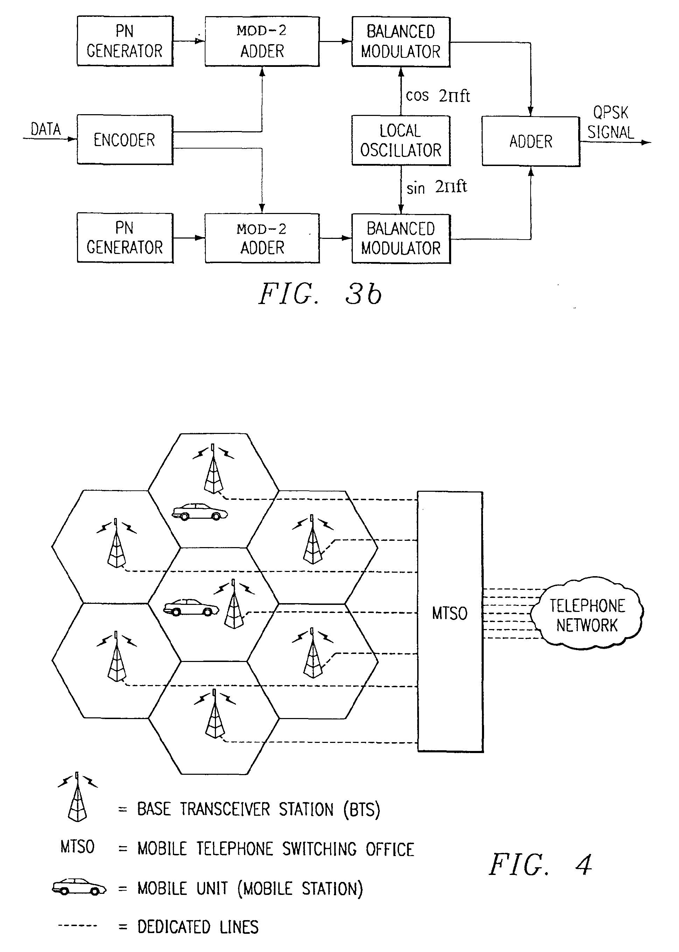

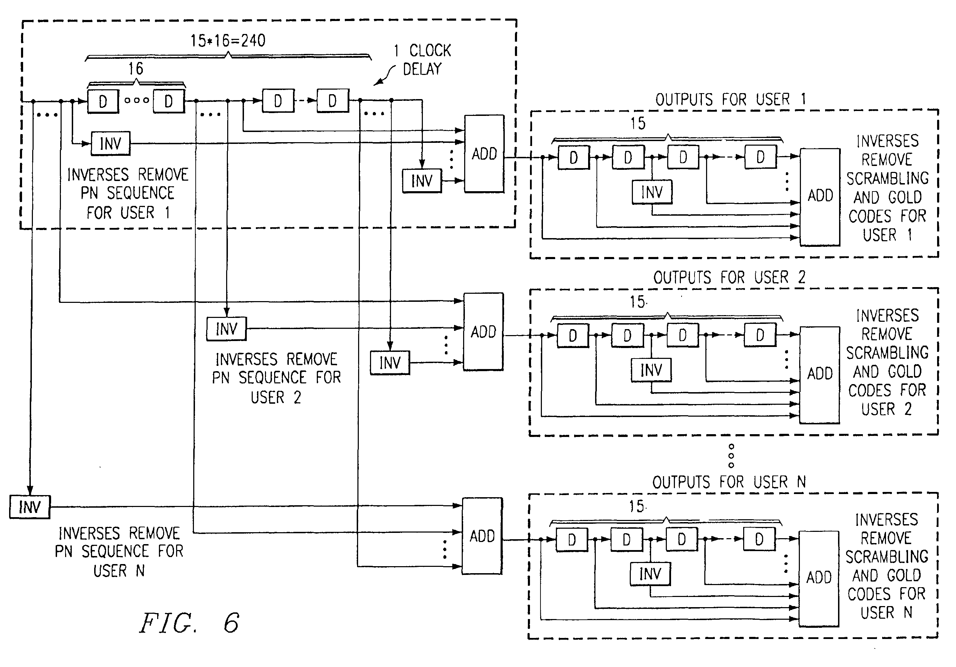

Spread spectrum wireless communications utilize a radio frequency bandwidth greater than the minimum bandwidth required for the transmitted data rate, but many users may simultaneously occupy the bandwidth. Each of the users has a pseudo-random code for "spreading" information to encode it and for "despreading" (by correlation) the spread spectrum signal for recovery of the corresponding information. Figure 2 shows a system block diagram, and Figures 3a-3b illustrates pseudo-random code plus a QPSK encoder. This multiple access is typically called code division multiple access (CDMA). The pseudo-random code may be an orthogonal (Walsh) code, a pseudo-noise (PN) code, a Gold code, or combinations (modulo-2 additions) of such codes. After despreading the received signal at the correct time instant, the user recovers the corresponding information while the remaining interfering signals appear noise-like. For example, the interim standard IS-95 for such CDMA communications employs channels of 1.25 MHz bandwidth and a code pulse interval (chip) $T_c$ of 0.8138 microsecond with a transmitted symbol (bit) lasting 64 chips. The recent wideband CDMA (WCDMA) proposal employs a 3.84 MHz bandwidth and the CDMA code length applied to each information symbol may vary from 4 chips to 256 chips. The CDMA code for each user is typically produced as the modulo-2 addition of a Walsh code with a pseudo-random code (two pseudo-random codes for QPSK modulation) to improve the noise-like nature of the resulting signal. A cellular system as illustrated in Figure 4 could employ IS-95 or WCDMA for the air interface between the base station and the mobile user station.
A receiver synchronizes with the transmitter in two steps: code acquisition and code tracking. Code acquisition is an initial search to bring the phase of the receiver's local code generator to within typically a half chip of the transmitter's, and code tracking maintains fine alignment of chip boundaries of the incoming and locally generated codes. Conventional code tracking utilizes a delay-lock loop (DLL) or a tau-dither loop (TDL), both of which are based on the well-known early-late gate principle.
In a multipath situation a RAKE receiver has individual demodulators (fingers) tracking separate paths and combines the results to improve signal-to-noise ratio (SNR) according to a method such as maximal ratio combining (MRC) in which the individual detected signals are synchronized and weighted according to their signal strengths. A RAKE receiver typically has a DLL or TDL code tracking loop for each finger together with control circuitry for assigning tracking units to received paths.
The UMTS (universal mobile telecommunications system) approach UTRA (UMTS terrestrial radio access) provides a spread spectrum cellular air interface with both FDD (frequency division duplex) and TDD (time division duplex) modes of operation. UTRA employs 10 ms duration frames partitioned into 15 time slots with each time slot consisting of 2560 chips (at a chip rate of 3.84 Mcps). With FDD the base station and the mobile user transmit on different frequencies, whereas with TDD a time slot may be allocated to either base station (downlink) or mobile user (uplink) transmissions. In addition, the TDD systems are differentiated from the FDD systems by the presence of interference cancellation at the receiver. The spreading gain for TDD systems is small (8-16), and the absence of the long spreading code implies that the multi-user multipath interference does not look Gaussian and needs to be canceled at the receiver.
Training sequences transmitted by both mobile users and a base station allow for channel estimation (channel impulse response estimation) by receivers and thus matched filters for coherent detection; Figure 5 shows a generic receiver. With FDD mode systems, channel estimation is accomplished by averaging pilot symbols that are periodically inserted in the data stream of each user. For the TDD mode systems channel estimation is performed by a cyclic correlation with a specially constructed midamble. In particular, a TDD time slot may be partitioned (burst type 2) into a first data field (1104 chips), a midamble field (256 chips), a second data field (1104 chips), and a guard period (96 chips). The midamble is based upon a sequence with good autocorrelation properties that theoretically should lead to good channel estimates. The midamble codes for all the users are derived from the same basic sequence by offsets equal to about the number of taps on the channel impulse response (e.g., 24 chips). However, the use of a midamble derived from a single sequence has drawbacks including the constraint that the maximum number of users multiplied by the maximum possible length of the channel impulse response must be less than the length of the basic sequence.

Proposals have been made to replace TDD midambles with pilot symbols. In this case with a spreading factor of 16 the 256 (or 512) chips for a midamble would be replaced by 16 (or 32) pilot symbols. However, the multipath nature of the air interface implies the spread and scrambled pilot symbols in the downlink will significantly lose orthogonality because the spreading factor is at most 16 and the scrambling codes have lengths of only 16 chips. This implies degradation of channel estimates and delay profile estimates.

SUMMARY OF THE INVENTION

The present invention provides TDD mode time slots with imbedded pilot symbol sequences chosen for each user pseudo-randomly or based on maximal-length sequences. Preferred embodiments include a hierarchical channel and delay profile estimation structure which lower computational complexity.

This has advantages including better performance and lower computational complexity than midambles.

BRIEF DESCRIPTION OF THE DRAWINGS

Figure 1 shows pilot symbol sequences.
Figure 2 shows a spread spectrum system.
Figures 3a-3b illustrate pseudo-random code and symbols.
Figure 4 shows a cellular system.
Figure 5 is a block diagram of a receiver.
Figure 6 illustrates a hierarchical channel estimation.
Figures 7-14 are simulation results.

DETAILED DESCRIPTION OF THE PREFERRED EMBODIMENTS

1. Overview

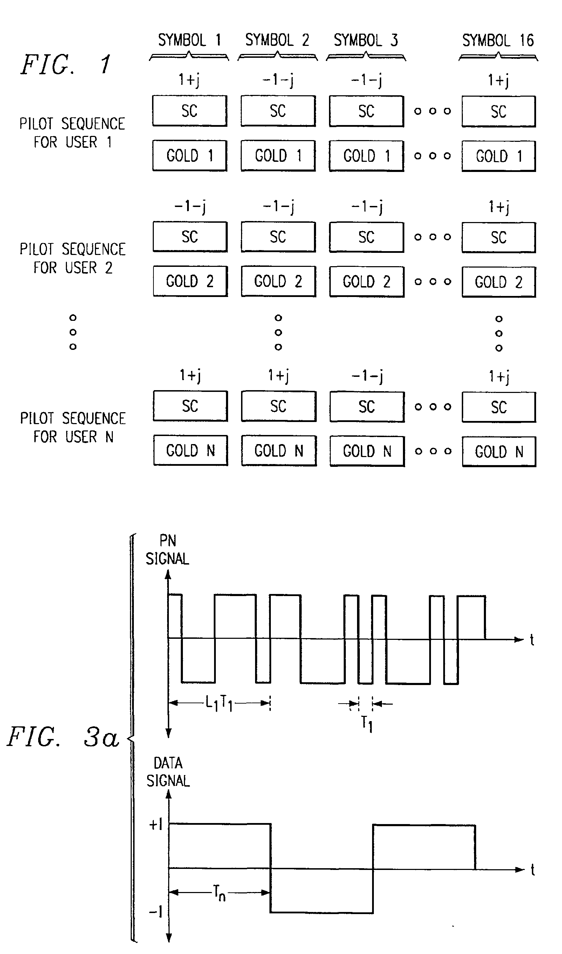

The preferred embodiment spread spectrum communication systems incorporate preferred embodiment channel and delay profile estimation using time slots containing pilot symbol sequences: some preferred embodiments select the pilot symbol sequences based on maximal-length sequences as illustrated in Figure 1, and other preferred embodiments pseudo-randomize the pilot symbol sequences. Preferred embodiments include wideband CDMA systems in time division duplex (TDD) mode using frames consisting of time slots that include data blocks plus training sequences of pilot symbols. A preferred embodiment hierarchical structure as shown in Figure 6 efficiently computes channel estimates for multiple users.

In preferred embodiment spread spectrum communications systems the base stations and the mobile users could each include digital signal processors (DSP's) or other programmable devices with stored programs for performance of the signal processing together with analog integrated circuits for amplification of inputs to or outputs from antennas and conversion between analog and digital. The stored programs may, for example, be in ROM onboard the processor or in external flash EEPROM. The antennas may be parts of RAKE detectors with multiple fingers for each user's signals. The DSP's could be TMS320C6x or TMS320C5x DSP's from Texas Instruments.

2. Maximal-length sequence based pilot sequences

First preferred embodiments provide pilot symbol sequences based on maximal length sequences for uses such as channel estimation by spread spectrum communication systems. Indeed, for a UTRA-like system with scrambling code length 16 and spreading factor up to 16 and with frames containing 15 time slots (2560 chips per time slot), this replaces the special 256 (or 512) chip midamble of TDD mode with pilot symbol sequences based on maximal length sequences.

Further, preferred embodiment receiver structures perform delay profile estimation (DPE) and channel estimation very efficiently and require less complexity than the special midamble approach; see Figure 6.

Maximal-length sequences (m-sequences) are known to have good autocorrelation properties. There are two m-sequences of length 15:

[1 1 1 1 1 -1 -1 -1 1 -1 -1 1 1 -1 1 -1] and

[-1 1 -1 1 1 -1 -1 1 -1 -1 -1 1 1 1 1]

Note that the second sequence is the first sequence in reverse order. In order to form sequences of length 16, simply append a 1 or -1 to the end of the first sequence to get
Sequence 1 = [ 1 1 1 1 -1 -1 -1 1 -1 -1 1 1 -1 1 -1 1] and
Sequence 2 = [ 1 -1 1 -1 1 1 -1 1 -1 -1 -1 1 1 1 1]
There are 16 circular shifts of each sequence, so there are a total of 32 sequences of length 16. These sequences are numbered s0 to s15 for circular shifts of Sequence 1 and s16 to s31 for circular shifts of Sequence 2 and are given in Tables 1 (a) and 1 (b). Multiplying one of these 32 sequences by the QPSK symbol (1+j) generates a pilot symbol sequence.

| *16 pilot symbol sequences generated by left circular shifts of Sequence 1.* | | | | | | | | | | | | | | | | |
|---|---|---|---|---|---|---|---|---|---|---|---|---|---|---|---|---|
| | Pilot Symbol Number | | | | | | | | | | | | | | | |
| | 0 | 1 | 2 | 3 | 4 | 5 | 6 | 7 | 8 | 9 | 10 | 11 | 12 | 13 | 14 | 15 |
| s0 | 1 | 1 | 1 | 1 | -1 | -1 | -1 | 1 | -1 | -1 | 1 | 1 | -1 | 1 | -1 | 1 |
| s1 | 1 | 1 | 1 | -1 | -1 | -1 | 1 | -1 | -1 | 1 | 1 | -1 | 1 | -1 | 1 | 1 |
| s2 | 1 | 1 | -1 | -1 | -1 | 1 | -1 | -1 | 1 | 1 | -1 | 1 | -1 | 1 | 1 | 1 |
| s3 | 1 | -1 | -1 | -1 | 1 | -1 | -1 | 1 | 1 | -1 | 1 | -1 | 1 | 1 | 1 | 1 |
| s4 | -1 | -1 | -1 | 1 | -1 | -1 | 1 | 1 | -1 | 1 | -1 | 1 | 1 | 1 | 1 | 1 |
| s5 | -1 | -1 | 1 | -1 | -1 | 1 | 1 | -1 | 1 | -1 | 1 | 1 | 1 | 1 | 1 | -1 |
| s6 | -1 | 1 | -1 | -1 | 1 | 1 | -1 | 1 | -1 | 1 | 1 | 1 | 1 | 1 | -1 | -1 |
| s7 | 1 | -1 | -1 | 1 | 1 | -1 | 1 | -1 | 1 | 1 | 1 | 1 | 1 | -1 | -1 | -1 |
| s8 | -1 | -1 | 1 | 1 | -1 | 1 | -1 | 1 | 1 | 1 | 1 | 1 | -1 | -1 | -1 | 1 |
| s9 | -1 | 1 | 1 | -1 | 1 | -1 | 1 | 1 | 1 | 1 | 1 | -1 | -1 | -1 | 1 | -1 |
| s10 | 1 | 1 | -1 | 1 | -1 | 1 | 1 | 1 | 1 | 1 | -1 | -1 | -1 | 1 | -1 | -1 |
| s11 | 1 | -1 | 1 | -1 | 1 | 1 | 1 | 1 | 1 | -1 | -1 | -1 | 1 | -1 | -1 | 1 |
| s12 | -1 | 1 | -1 | 1 | 1 | 1 | 1 | 1 | -1 | -1 | -1 | 1 | -1 | -1 | 1 | 1 |
| s13 | 1 | -1 | 1 | 1 | 1 | 1 | 1 | -1 | -1 | -1 | 1 | -1 | -1 | 1 | 1 | -1 |
| s14 | -1 | 1 | 1 | 1 | 1 | 1 | -1 | -1 | -1 | 1 | -1 | -1 | 1 | 1 | -1 | 1 |
| s15 | 1 | 1 | 1 | 1 | 1 | -1 | -1 | -1 | 1 | -1 | -1 | 1 | 1 | -1 | 1 | -1 |

| *16 pilot symbol sequences generated by left circular shifts of Sequence 2.* | | | | | | | | | | | | | | | | |
|---|---|---|---|---|---|---|---|---|---|---|---|---|---|---|---|---|---|
| | Pilot Symbol Number | | | | | | | | | | | | | | | |
| | 0 | 1 | 2 | 3 | 4 | 5 | 6 | 7 | 8 | 9 | 10 | 11 | 12 | 13 | 14 | 15 |
| s16 | 1 | -1 | 1 | -1 | 1 | 1 | -1 | -1 | 1 | -1 | -1 | -1 | 1 | 1 | 1 | 1 |
| s17 | -1 | 1 | -1 | 1 | 1 | -1 | -1 | 1 | -1 | -1 | -1 | 1 | 1 | 1 | 1 | 1 |
| s18 | 1 | -1 | 1 | 1 | -1 | -1 | 1 | -1 | -1 | -1 | 1 | 1 | 1 | 1 | 1 | -1 |
| s19 | -1 | 1 | 1 | -1 | -1 | 1 | -1 | -1 | -1 | 1 | 1 | 1 | 1 | 1 | -1 | 1 |
| s20 | 1 | 1 | -1 | -1 | 1 | -1 | -1 | -1 | 1 | 1 | 1 | 1 | 1 | -1 | 1 | -1 |
| s21 | 1 | -1 | -1 | 1 | -1 | -1 | -1 | 1 | 1 | 1 | 1 | 1 | -1 | 1 | -1 | 1 |
| s22 | -1 | -1 | 1 | -1 | -1 | -1 | 1 | 1 | 1 | 1 | 1 | -1 | 1 | -1 | 1 | 1 |
| s23 | -1 | 1 | -1 | -1 | -1 | 1 | 1 | 1 | 1 | 1 | -1 | 1 | -1 | 1 | 1 | -1 |
| s24 | 1 | -1 | -1 | -1 | 1 | 1 | 1 | 1 | 1 | -1 | 1 | -1 | 1 | 1 | -1 | -1 |
| s25 | -1 | -1 | -1 | 1 | 1 | 1 | 1 | 1 | -1 | 1 | -1 | 1 | 1 | -1 | -1 | 1 |
| s26 | -1 | -1 | 1 | 1 | 1 | 1 | 1 | -1 | 1 | -1 | 1 | 1 | -1 | -1 | 1 | -1 |

(continued)

| | Pilot Symbol Number | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| s27 | -1 | 1 | 1 | 1 | 1 | 1 | -1 | 1 | -1 | 1 | 1 | -1 | -1 | 1 | -1 | -1 |
| s28 | 1 | 1 | 1 | 1 | 1 | -1 | 1 | -1 | 1 | 1 | -1 | -1 | 1 | -1 | -1 | -1 |
| s29 | 1 | 1 | 1 | 1 | -1 | 1 | -1 | 1 | 1 | -1 | -1 | 1 | -1 | -1 | -1 | 1 |
| s30 | 1 | 1 | 1 | -1 | 1 | -1 | 1 | 1 | -1 | -1 | 1 | -1 | -1 | -1 | 1 | 1 |
| s31 | 1 | 1 | -1 | 1 | -1 | 1 | 1 | -1 | -1 | 1 | -1 | -1 | -1 | 1 | 1 | 1 |

Assign a different pilot symbol sequence to each user in order to minimize crosscorrelations between users.
Instead of Walsh codes for spreading (channelization codes), use chip sequences based on Gold-like sequences to minimize crosscorrelations.

| 16 chip sequences based on Gold-like sequences. | | | | | | | | | | | | | | | | |
|---|---|---|---|---|---|---|---|---|---|---|---|---|---|---|---|---|
| | Chip number | | | | | | | | | | | | | | | |
| Signature | 0 | 1 | 2 | 3 | 4 | 5 | 6 | 7 | 8 | 9 | 10 | 11 | 12 | 13 | 14 | 15 |
| 0 | 1 | 1 | 1 | -1 | -1 | -1 | 1 | -1 | -1 | 1 | 1 | -1 | 1 | -1 | 1 | 1 |
| 1 | -1 | 1 | -1 | -1 | 1 | 1 | 1 | -1 | 1 | 1 | 1 | -1 | -1 | 1 | -1 | 1 |
| 2 | 1 | -1 | 1 | 1 | 1 | -1 | 1 | 1 | -1 | 1 | 1 | 1 | -1 | 1 | -1 | 1 |
| 3 | -1 | 1 | -1 | 1 | -1 | -1 | -1 | -1 | -1 | 1 | -1 | 1 | -1 | 1 | 1 | 1 |
| 4 | 1 | -1 | -1 | -1 | -1 | 1 | 1 | -1 | -1 | -1 | -1 | 1 | -1 | -1 | -1 | 1 |
| 5 | -1 | -1 | 1 | -1 | 1 | -1 | 1 | -1 | 1 | -1 | -1 | 1 | 1 | 1 | 1 | 1 |
| 6 | -1 | 1 | 1 | 1 | -1 | -1 | 1 | 1 | 1 | -1 | -1 | -1 | -1 | -1 | -1 | 1 |
| 7 | 1 | 1 | -1 | -1 | -1 | -1 | -1 | 1 | 1 | -1 | 1 | 1 | 1 | 1 | -1 | 1 |
| 8 | 1 | -1 | 1 | -1 | -1 | 1 | -1 | 1 | 1 | 1 | -1 | -1 | -1 | 1 | 1 | 1 |
| 9 | -1 | 1 | 1 | -1 | 1 | 1 | -1 | 1 | -1 | -1 | 1 | 1 | -1 | -1 | 1 | 1 |
| 10 | 1 | 1 | 1 | 1 | 1 | 1 | -1 | -1 | 1 | 1 | -1 | 1 | 1 | -1 | -1 | 1 |
| 11 | 1 | 1 | -1 | 1 | 1 | 1 | 1 | 1 | -1 | -1 | -1 | -1 | 1 | 1 | 1 | 1 |
| 12 | 1 | -1 | -1 | 1 | 1 | -1 | -1 | -1 | 1 | -1 | 1 | -1 | -1 | -1 | 1 | 1 |
| 13 | -1 | -1 | -1 | 1 | -1 | 1 | 1 | 1 | 1 | 1 | 1 | 1 | 1 | -1 | 1 | 1 |
| 14 | -1 | -1 | -1 | -1 | 1 | -1 | -1 | 1 | -1 | 1 | -1 | -1 | 1 | -1 | -1 | 1 |
| 15 | -1 | -1 | 1 | 1 | -1 | 1 | -1 | -1 | -1 | -1 | 1 | -1 | 1 | 1 | -1 | 1 |

The pilot sequences modulate the chip-by-chip combination of the Gold-like sequence for that user and the scrambling code for the cell as illustrated in Figure 1. The users can be numbered according to their Walsh code as they are listed in the standard order in Table 3. The users modulate their data symbols employing the assigned Walsh code. If a user is assigned multiple Walsh codes, the number for the first Walsh code can be used; and if Walsh codes higher in the code tree are used (Walsh codes of length 4 or 8), then the number for the first leaf that corresponds to that node can be used. The Gold-like sequences are rotated between the users to further randomize the interference. In particular, if the frame number is equal to m mod 16, then user number k will use Gold-like sequence number (k+m) mod 16.

Table 3:

| Walsh codes for a spreading factor of 16. | | | | | | | | | | | | | | | | |
|---|---|---|---|---|---|---|---|---|---|---|---|---|---|---|---|---|
| User Number | Walsh Code | | | | | | | | | | | | | | | |
| 0 | 1 | 1 | 1 | 1 | 1 | 1 | 1 | 1 | 1 | 1 | 1 | 1 | 1 | 1 | 1 | 1 |
| 1 | 1 | 1 | 1 | 1 | 1 | 1 | 1 | 1 | -1 | -1 | -1 | -1 | -1 | -1 | -1 | -1 |
| 2 | 1 | 1 | 1 | 1 | -1 | -1 | -1 | -1 | 1 | 1 | 1 | 1 | -1 | -1 | -1 | -1 |
| 3 | 1 | 1 | 1 | 1 | -1 | -1 | -1 | -1 | -1 | -1 | -1 | -1 | 1 | 1 | 1 | 1 |
| 4 | 1 | 1 | -1 | -1 | 1 | 1 | -1 | -1 | 1 | 1 | -1 | -1 | 1 | 1 | -1 | -1 |
| 5 | 1 | 1 | -1 | -1 | 1 | 1 | -1 | -1 | -1 | -1 | 1 | 1 | -1 | -1 | 1 | 1 |
| 6 | 1 | 1 | -1 | -1 | -1 | -1 | 1 | 1 | 1 | 1 | -1 | -1 | -1 | -1 | 1 | 1 |
| 7 | 1 | 1 | -1 | -1 | -1 | -1 | 1 | 1 | -1 | -1 | 1 | 1 | 1 | 1 | -1 | -1 |
| 8 | 1 | -1 | 1 | -1 | 1 | -1 | 1 | -1 | 1 | -1 | 1 | -1 | 1 | -1 | 1 | -1 |
| 9 | 1 | -1 | 1 | -1 | 1 | -1 | 1 | -1 | -1 | 1 | -1 | 1 | -1 | 1 | -1 | 1 |
| 10 | 1 | -1 | 1 | -1 | -1 | 1 | -1 | 1 | 1 | -1 | 1 | -1 | -1 | 1 | -1 | 1 |
| 11 | 1 | -1 | 1 | -1 | -1 | 1 | -1 | 1 | -1 | 1 | -1 | 1 | 1 | -1 | 1 | -1 |
| 12 | 1 | -1 | -1 | 1 | 1 | -1 | -1 | 1 | 1 | -1 | -1 | 1 | 1 | -1 | -1 | 1 |
| 13 | 1 | -1 | -1 | 1 | 1 | -1 | -1 | 1 | -1 | 1 | 1 | -1 | -1 | 1 | 1 | -1 |
| 14 | 1 | -1 | -1 | 1 | -1 | 1 | 1 | -1 | 1 | -1 | -1 | 1 | -1 | 1 | 1 | -1 |
| 15 | 1 | -1 | -1 | 1 | -1 | 1 | 1 | -1 | -1 | 1 | 1 | -1 | 1 | -1 | -1 | 1 |

The pilot symbol sequences are assigned according to the user number and the base station number. The sequences are varied from cell to cell in order to reduce the effect of intercell interference. There are 128 scrambling codes of length 16 chips given in Annex A of 3G TS 25.223, so assign the base station number in a one-to-one correspondence with the scrambling code number, then there is no additional network planning needed to assign the pilot symbol sequences for the UTRA Physical Layer TDD mode. There can be up to 16 users with a spreading factor of 16 in a cell, so sets of 16 pilot symbol sequences can be assigned to each cell. Table 4 shows the 128 sets of pilot symbol sequences in abbreviated form. There are 8 basic sets of pilot symbols, and each set has 16 circular shifts, so there are a total of 128 sets of pilot symbols. Set numbers 0 to 15 are generated by left circular shifts of the set for BTS 0. Similarly, the sets for BTS 16, 32, 48, 64, 80, 96, and 112 also have 16 circular shifts each, but these are not shown in the table due to lack of space.

EP 1 063 780 A2

*Pilot symbol sequences used for each user. Each of the 8 basic sets of sequences (numbered BTS 0,16,32,48,64,80,96,112) has 16 circular shifts, so there are 128 sets of sequences represented in the table. This table has been constructed so that if any pair of the 128 sets is chosen, there will be at most one Gold code which uses the same pilot sequence in both sets. This ensures that the interference between base stations looks random. Users assigned this Gold code will still have different scrambling codes.*

| | User Number | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| BTS 0 | s0 | s1 | s2 | s3 | s4 | s5 | s6 | s7 | s8 | s9 | s10 | s11 | s12 | s13 | s14 | s15 |
| BTS 1 | s1 | s2 | s3 | s4 | s5 | s6 | s7 | s8 | s9 | s10 | s11 | s12 | s13 | s14 | s15 | s0 |
| BTS 2 | s2 | s3 | s4 | s5 | s6 | s7 | s8 | s9 | s10 | s11 | s12 | s13 | s14 | s15 | s0 | s1 |
| BTS 3 | s3 | s4 | s5 | s6 | s7 | s8 | s9 | s10 | s11 | s12 | s13 | s14 | s15 | s0 | s1 | s2 |
| BTS 4 | s4 | s5 | s6 | s7 | s8 | s9 | s10 | s11 | s12 | s13 | s14 | s15 | s0 | s1 | s2 | s3 |
| BTS 5 | s5 | s6 | s7 | s8 | s9 | s10 | s11 | s12 | s13 | s14 | s15 | s0 | s1 | s2 | s3 | s4 |
| BTS 6 | s6 | s7 | s8 | s9 | s10 | s11 | s12 | s13 | s14 | s15 | s0 | s1 | s2 | s3 | s4 | s5 |
| BTS 7 | s7 | s8 | s9 | s10 | s11 | s12 | s13 | s14 | s15 | s0 | s1 | s2 | s3 | s4 | s5 | s6 |
| BTS 8 | s8 | s9 | s10 | s11 | s12 | s13 | s14 | s15 | s0 | s1 | s2 | s3 | s4 | s5 | s6 | s7 |
| BTS 9 | s9 | s10 | s11 | s12 | s13 | s14 | s15 | s0 | s1 | s2 | s3 | s4 | s5 | s6 | s7 | s8 |
| BTS 10 | s10 | s11 | s12 | s13 | s14 | s15 | s0 | s1 | s2 | s3 | s4 | s5 | s6 | s7 | s8 | s9 |
| BTS 11 | s11 | s12 | s13 | s14 | s15 | s0 | s1 | s2 | s3 | s4 | s5 | s6 | s7 | s8 | s9 | s10 |
| BTS 12 | s12 | s13 | s14 | s15 | s0 | s1 | s2 | s3 | s4 | s5 | s6 | s7 | s8 | s9 | s10 | s11 |
| BTS 13 | s13 | s14 | s15 | s0 | s1 | s2 | s3 | s4 | s5 | s6 | s7 | s8 | s9 | s10 | s11 | s12 |
| BTS 14 | s14 | s15 | s0 | s1 | s2 | s3 | s4 | s5 | s6 | s7 | s8 | s9 | s10 | s11 | s12 | s13 |
| BTS 15 | s15 | s0 | s1 | s2 | s3 | s4 | s5 | s6 | s7 | s8 | s9 | s10 | s11 | s12 | s13 | s14 |
| BTS 16 | s16 | s17 | s18 | s19 | s20 | s21 | s22 | s23 | s24 | s25 | s26 | s27 | s28 | s29 | s30 | s31 |
| Sets for BTS 17-31 formed by left circular shifts of BTS 16 | | | | | | | | | | | | | | | | |
| BTS 32 | s0 | s2 | s4 | s6 | s8 | s10 | s12 | s14 | s16 | s18 | s20 | s22 | s24 | s26 | s28 | s30 |
| Sets for BTS 33-47 formed by left circular shifts of BTS 32 | | | | | | | | | | | | | | | | |
| BTS48 | s1 | s3 | s5 | s7 | s9 | s11 | s13 | s15 | s17 | s19 | s21 | s23 | s25 | s27 | s29 | s31 |
| Sets for BTS 49-63 formed by left circular shifts of BTS 48 | | | | | | | | | | | | | | | | |

| | User Number | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| BTS 64 | s23 | s22 | s21 | s20 | s19 | s18 | s17 | s16 | s15 | s14 | s13 | s12 | s11 | s10 | s9 | s8 |
| Sets for BTS 65-79 formed by left circular shifts of BTS 64 | | | | | | | | | | | | | | | | |
| BTS 80 | s31 | s30 | s29 | s28 | s27 | s26 | s25 | s24 | s7 | s6 | s5 | s4 | s3 | s2 | s1 | s0 |
| Sets for BTS 81-95 formed by left circular shifts of BTS 80 | | | | | | | | | | | | | | | | |
| BTS 96 | s0 | s3 | s6 | s9 | s12 | s15 | s19 | s22 | s25 | s28 | s31 | s2 | s7 | s11 | s16 | s23 |
| Sets for BTS 97-111 formed by left circular shifts of BTS 96 | | | | | | | | | | | | | | | | |
| BTS 112 | s14 | s17 | s20 | s23 | s26 | s29 | s1 | s4 | s7 | s10 | s13 | s18 | s21 | s24 | s27 | s30 |
| Sets for BTS 113-127 formed by left circular shifts of BTS 112 | | | | | | | | | | | | | | | | |

EP 1 063 780 A2

Figure 1 illustrates how the pilot sequences are constructed. Each user has a pilot sequence of 16 symbols with a spreading factor of 16. The Gold-like code for that user is combined with the scrambling code of the base station. Each base station is assigned a unique 16 chip long code that is used to scramble the downlink and the uplink data symbols for that base station. Each pilot symbol is then modulated with a +1 or a -1 times (1+j), which is determined by the maximal-length sequence found in Table 1. As an example, suppose that a user has been assigned the 16-chip Walsh code [1 1 1 1 -1-1-1 -1 1 1 1 1 -1 -1 -1-1], so that it is denoted user number 2, and that the base station is numbered BTS 1. The pilot symbol sequence for this user is determined in a 3-step process as follows.

1) Find the set of sequences for the base station in Table 4. The set of maximal length sequences for BTS 1 is [s1 s2 s3 s4 s5 s6 s7 s8 s9 s10 s11 s12 s13 s14 s15 s0].
2) Choose the particular maximal length sequence for the user from the set found in step 1. The user is assigned the third Walsh code, so it uses the third pilot sequence in the set, which is s3. When multiplied by (1+j), the pilot symbol sequence is
(1+j)[ 1-1-1-1 1 -1 -1 1 1-1 1-1 1 1 1 1] The sixteen pilot symbols used every time slot by this user are 1+j, -1-j, -1-j, -1-j, 1+j, -1-j, -1-j, 1+j, 1+j, -1-j, 1+j, -1-j, 1+j, 1+j, 1+j, 1+j.
3) Find the Gold-like code from Table 2. As an example, let the frame number be 5. The user number is 2, so the Gold-like sequence to be used is (2+5) mod 16 = 7. From Table 2 this sequence is [1 1 -1 -1 -1 -1 -1 1 1 -1 1 1 1 1 -1 1].

In short, first pick a base station number by using the base station's scrambling code position on a list of the scrambling codes, and pick a user number from the user's Walsh code position on a list of the Walsh codes. Then the pilot sequence is the one found in Table 4 at row number equal the base station number and column number equal to the user number. Next, find the Gold-like code in Table 2 with row number equal to the modulo-16 sum of the frame number plus the user number. Then, the base station's scrambling code (16 chips) and the Gold-like code (16 chips) are multiplied chip-by-chip and this 16-chip product modulates each symbol in the pilot symbol sequence (16 symbols) to yield a 256-chip sequence of $\pm(1+j)$s to insert in the time slot.

For a channel with one time slot per frame, the Gold-like code rotates after each use, although this could be omitted in further preferred embodiments. Indeed, within a cell the scrambling code is the same for all users, but the pilot symbol sequences differ and the Gold-like codes differ for both symbol level and chip level differences among users. The rotation of Gold-like codes adds a time level difference to further increase randomization, but without significant increase in computational complexity when using the structure of Figure 6 to simultaneously estimate the channels of all users.

Performance simulations for first preferred embodiments
Link level simulations help evaluate the performance gains of using these pilot symbol sequences instead of the specially constructed midambles. The link level simulation parameters used are given in Table 5:

| The simulation parameters used to compare the performance of the midamble versus the performance with pilot symbols. | | |
|---|---|---|
| | Vehicular | Indoor-to-outdoor pedestrian |
| Velocity | 120 kmph (Figures 7 and 9) | 3 kmph (Figure 8 and 10) |
| Spreading gain (SF) | 16 | 16 |
| Number of users | 8 | 8 |
| Midamble parameters | 256 chips, basic sequence is 192 chips | 256 chips, basic sequence is 192 chips |
| Midamble channel estimation | Circular correlation performed with FFT, Mult., and IFFT | Circular correlation performed with FFT, Mult., and IFFT |
| Pilot symbol parameters | 16 pilot symbols with spreading factor of 16 | 16 pilot symbols with spreading factor of 16 |
| Pilot symbol channel estimation | Average over 16 pilot symbols | Average over 16 pilot symbols |
| Joint detection | Figures 9 and 10 | Figures 9 and 10 |

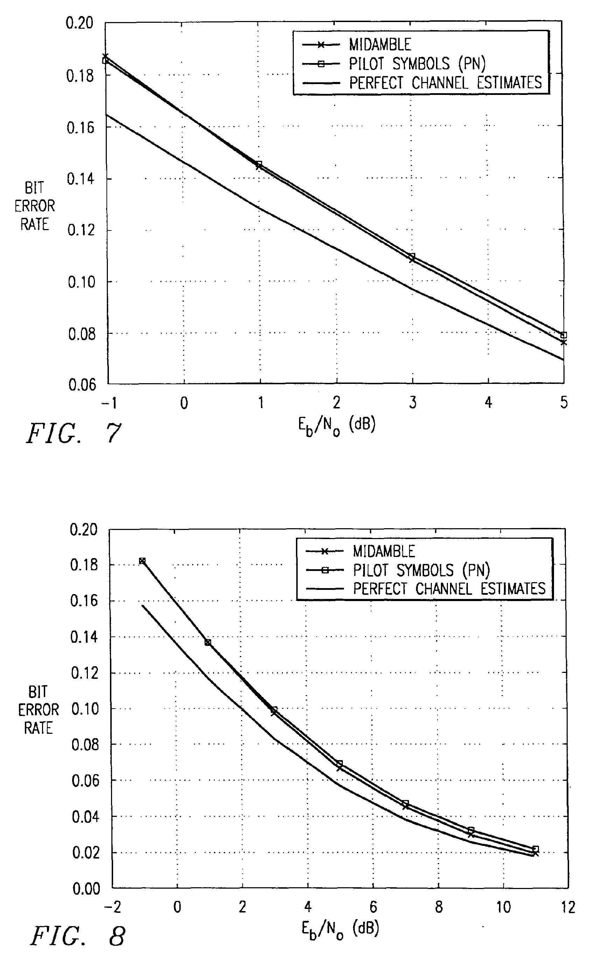

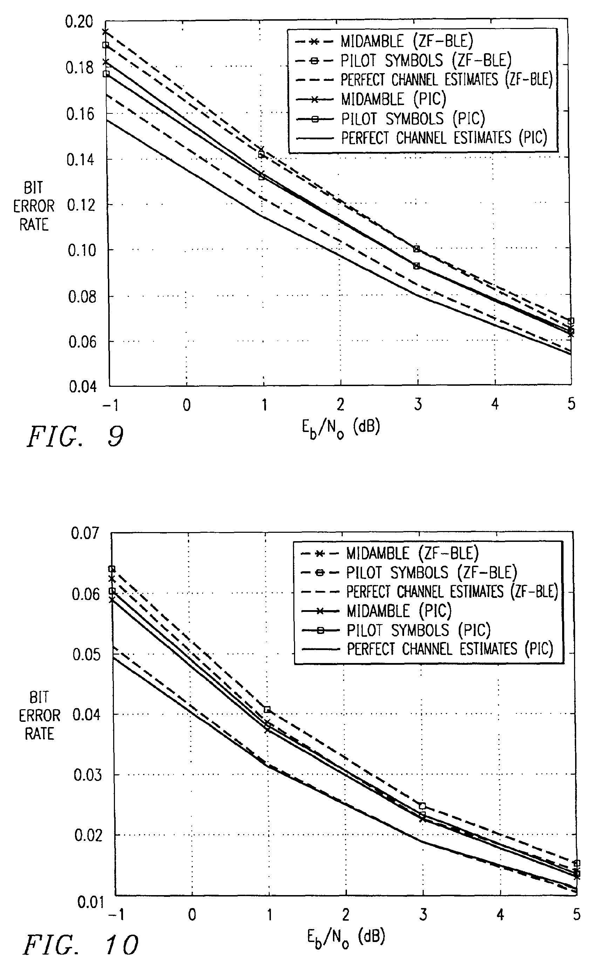

The performance with the Vehicular B channel is shown in Figure 7. The performance with perfect channel estimates is found by assuming that the receiver knows the channel exactly at the center of each time slot, and this perfect channel estimate is used throughout the time slot. The performance with perfect channel estimates is given so that the absolute loss due to imperfect channel estimation can be determined. With a spreading factor of 16 and with 8 users, the BER curve with the special midamble is about 0.7 dB worse than the curve generated with perfect channel estimates at a raw BER of 0.10. The BER curve with the pilot symbols is about 0.1 dB worse than the curve with the special midamble. The performance with the Outdoor-to-Indoor and Pedestrian channel is shown in Figure 8. The special midamble performs about 0.6 dB worse than the perfect channel estimates, and the pilot symbols perform about 0.4 dB worse than the perfect channel estimates at a raw BER of 0.03.

There are two main types of joint detectors that could be used at the mobile -- linear detectors such as the decorrelating detector and subtractive interference cancellers such as the parallel interference canceller. The decorrelating detector used in these simulations is the zero-forcing block linear equalizer (ZF-BLE), and the subtractive interference canceller used is the partial parallel interference canceller (PIC) with soft decisions. Only one stage of partial PIC was used with a cancellation factor of 0.5. The type of joint detection to be used will not be standardized, so vendors will be able to achieve differentiation be employing different joint detectors. Only the simplest PIC was used in these simulations, and better results should be achievable by using multi-stage interference cancellers.

Figures 9 and 10 show the results of simulations for the Vehicular and Pedestrian channels, respectively. There are two sets of curves in each plot. The solid lines show the BER performance with the ZF-BLE, and the dashed lines show the performance with the 1-stage partial PIC.

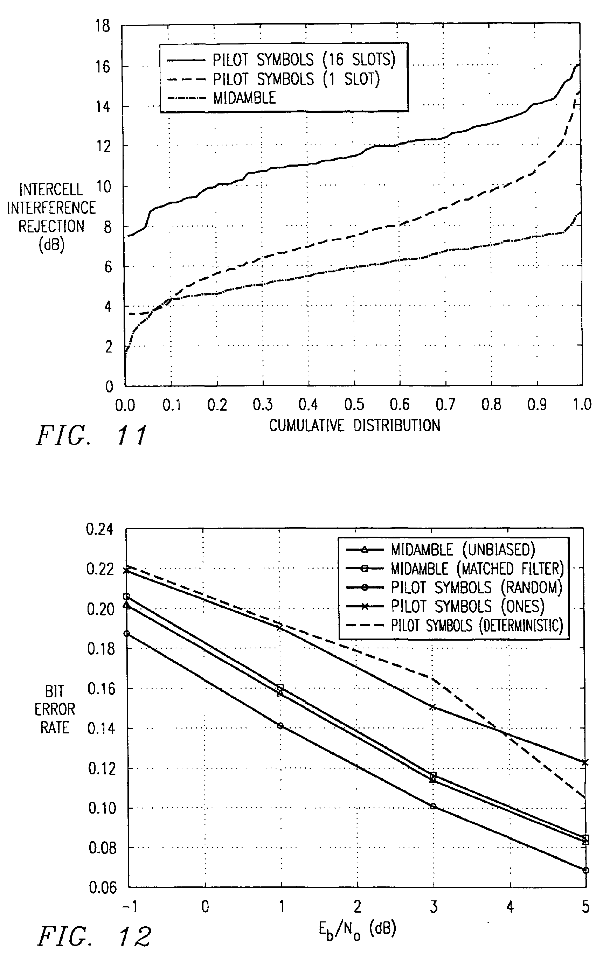

TDD systems will operate in a multi-cell environment, so channel estimation performance in such an environment must be studied. Figure 11 shows how the cross correlations between base stations will affect channel estimation. In Figure 11, there are 2 base stations each with 8 users. The midamble from a different base station will have some cross correlation with the midamble of the home base station and will affect channel estimation. If channel estimates are performed over 24 chips, then the cross correlation can be calculated at each position. The position with the maximum cross correlation is used to generate Figure 11. The ratio of the power of the channel estimate from the home base station to the power of a channel estimate computed using the signal from the interfering base station is computed. An interference rejection of 6 dB means that if a channel estimate from the home base station has a power of 1 (amplitude of 1), then the interfering base station will cause a channel estimate on one of the 24 paths to have a power of 0.25 (amplitude of 0.5) if both base stations are received with equal power.

For example, let a mobile be at the boundary of two cells, and let it receive a signal from two base stations with equal power. Let the mobile receive a single path from each base station. If the interference rejection is 6 dB, then when the mobile measures the channel from base station 1, it will measure one path with amplitude 1 and a second path (due to the cross correlation with the interfering base station) with amplitude 0.5. The mobile will assume that there are two paths coming from base station 1 and will use a maximal ratio combiner with 2 paths. Since the correct path is weighted with amplitude 1 and the false path is weighted with amplitude 0.5, the mobile suffers a loss in $E_b/N_o$ of 1 dB. In order for a system to function well in a multi-cell environment the interference rejection must be kept as high as possible.

In Figure 11, the curve for the midambles was generated by computing the cross correlations between all the pairs of the 8 midambles of length 192 given in UTRA proposals assuming that each cell supports 8 users. In over 50% of the cases, the interference rejection was less than 6 dB. Similar simulations were performed with the pilot symbol sequences. With the pilot symbols, if the power in the channel estimates is averaged noncoherently over 16 time slots, then the interference rejection is on average about 6 dB better than with the special midambles. This is possible since the Gold codes used by each user change from frame to frame, but the midambles do not change from frame to frame.

The special midamble with 8 users has the ability to calculate channel estimates in a window of 24 chips. This window must be large enough to contain the entire channel impulse response and extra margin for any timing errors. If any paths extend outside the search window, the user will assume that they belong to another user and will not include them in the maximal ratio combiner. Any paths from other users that intrude into the window will be assumed to belong to that user, and the user will include them in the maximal ratio combiner even though these paths do not exist. There are penalties when the impulse response does not fit entirely within the window, and the length of the impulse response can change over time, so the window should be large enough to guarantee that the entire impulse response is contained within the window.

The penalty for having a window too small for the channel impulse response should not be overlooked. Assume that only one path extends outside of the channel estimation window so that a particular user will not include this path in the maximal-ratio combiner (MRC) and will include a false path from another user in the MRC. Then the user suffers the following losses:

1) Loss in $E_b/N_o$ from not including the one path that is located outside the channel estimation window.

2) Loss in diversity from not including this path in the MRC. This will be especially significant if there are only 2 or 3 paths arriving from the base station.

3) Extra noise from including the false path in the MRC.

As an example, if there are 2 paths arriving from the base station with powers of 0 dB and -10 dB, and the weaker path falls outside the channel estimation window, the user will suffer a loss in $E_b/N_o$ of over 1 dB.

Thus, the use of the special midamble for channel estimation severely limits the length of channel impulse response that can be tolerated. In order to increase the length of the search window, fewer users can be supported. The pilot symbol approach provides much more flexibility in the number of users and the lengths of channel impulse responses that can be supported. Similar to the FDD system, the maximum number of users is 16, and there are no hard limits on the lengths of the channel impulse responses. Channel estimates can be computed for all positions in each window.

In an indoor environment, generally the delay spreads of all users in a cell will be small. In an outdoor environment, however, users generally have widely varying delay spreads with users located at the edge of a cell having larger delay spreads than users closer to the base station. With the special midamble, the number of users that can be supported is inversely proportional to the largest delay spread expected by any user in the cell. The midamble is generated by repeating the same basic sequence with equal spacing between repetitions. If users at the edge of the cell have large delay spreads and require large spacings between repetitions, then the number of users supported in a cell will be severely limited.

Computational complexity comparison

In the following comparison, channel estimates are computed at all positions in the search window. With a midamble of length 192 chips and 8 users, the search window size is 24 chips long (6 µs). Any paths that occur outside this 24-chip window will appear to belong to the next user and will lead to higher bit error rates. Complexity comparisons will be made with search window sizes of 8, 24, and 50 chips. The complexity of the channel estimation with and without joint detection (JD) will be analyzed here. The difference is that channel estimates will either be computed for all users or only for a single user.

When computing channel estimates with pilot symbols, a key observation is to note that the pilot symbols form a hierarchical sequence. For a particular user, the combination of the Gold-like code and scrambling code will be the same for all 16 symbols. The only difference between the 16 symbols is the pilot symbol sequence. Thus the hierarchical structure of Figure 6 can be used to compute channel estimates at all the desired positions. This structure is very flexible and can handle any search window size [e.g. 1 us (4 chips) or 30 us (123 chips)]. The complexity is approximately proportional to the size of the search window.

In Figure 6, the hierarchical structure is set up to minimize the memory required. The complexity would be the same if the two sets of blocks were swapped, but the memory requirements would increase. The first block in the upper left corner of Figure 6 shows a 240-element complex memory for the samples at chip rate. For each user, every sixteenth sample has the PN sequence removed, and there are 15 additions to compute the output to feed to the second stage. The 240-element memory is shared by all the users. In the blocks on the right side of Figure 6 the spreading and Walsh codes are removed for each user, and there are 15 additions to compute the channel estimates for each position within the window. Since the channel estimates are not available until the middle of the slot, samples for the entire time slot will probably be stored in a buffer of size (154 symbols)(16 chips)(2 for complex) = 4928 bytes. The 240-element memory is simply part of this buffer. The total memory required with this hierarchical structure is

$$4928 + (8*15)(2 \text{ for complex}) = 5168 \text{ bytes}$$

With the special midamble structure the FFT's can be computed in place, so the total memory required is 4928 bytes.

It should be noted that if all the possible midambles are stored at the mobile, this will take up additional memory with the midamble approach. Storing the 128 midambles of length 192 and 128 midambles of length 456 will take over 10 kbytes. This memory can be off chip implying that it not increase the mobile complexity significantly.

When joint detection is used at the mobile, the mobile estimates the channel for all the users in the cell which receive data in the same time slot. With 8 users, 8 separate channel estimates must be made for each of the positions in the search window. The analysis of the complexity of computing 2 FFT's of length 192 has been given as 1.38 MIPS when the user receives data on one time slot per frame. The channel estimation is performed with an FFT, a complex multiplication, and an IFFT. If the complex multiplication takes 4 operations, then the total number of operations for channel estimation with the complex midamble is

FFT and IFFT: 1.38 MIPS

Multiplication:(192 chips)(4 for complex multiply)(100 frames) = 0.08 MIPS TOTAL of 1.46 MIPS for channel estimation with joint detection

If joint detection is not used, then channel estimates can be computed for just one user. This requires

Channel estimate for 1 path: (191 adds)(2 for complex)(100 frames) = 0.0382 MIPS
     For 24 paths, this requires 0.92 MIPS
TOTAL of 0.92 MIPS for channel estimation without joint detection

The computation of the channel estimate for the first position in the window for one user requires 255 complex additions. It requires 15*15 = 225 complex additions to fill up the hierarchical structure and then 15+15=30 complex additions to compute the channel estimate for each position. The total number of computations to compute channel estimates for all users over a 24 chip window is

(225+30*24)(2 for complex)(8 users)(100 frames) = 1.51 MIPS

TOTAL of 1.51 MIPS for channel estimation with joint detection

This complexity is almost the same as the complexity with the special midamble. However, the pilot symbols with the hierarchical structure are much more flexible than the special midamble. With the pilots there is no limitation that channel estimation has to be performed over 24 chips. If joint detection is not used at the mobile, the complexity of channel estimation is

(225+30*24)(2 for complex)(1 user)(100 frames) = 0.19 MIPS

TOTAL of 0.19 MIPS for channel estimation and DPE for multiuser detection case

A summary of all these results is presented in Table 6 below.

| *Comparison of complexity of channel estimation and delay profile estimation using either pilot symbols or the special midamble. The complexity of channel estimation with the special midamble is at least twice that needed with pilot symbols in most scenarios.* | | | | | |
|---|---|---|---|---|---|
| | Search window length: 8 chips (2 μs) | | Search window length: 24 chips (6 μs) | | Search window length: 50 chips (12 μs) | |
| | No joint detection | With joint detection | No joint detection | With joint detection | No joint detection | With joint detection |
| Pilot symbols | 0.10 MIPS | 0.74 MIPS | 0.19 MIPS | 1.51 MIPS | 0.35 MIPS | 2.76 MIPS |
| Special midamble | 0.31 MIPS | 1.46 MIPS | 0.92 MIPS | 1.46 MIPS | FAILS | FAILS |

As shown in the table above the computational complexity with the hierarchical structure is much less than with the special midamble for most scenarios. In addition the hierarchical structure is much more flexible and can support more users and a wider range of search windows. The block diagram of the hierarchical structure is also reproduced below.

3. Pseudo-random pilot sequences

Further preferred embodiments generally use pilot symbols chosen pseudo-randomly to improve performance as compared to midambles or deterministic pilot symbols. In a sense, this is a generalization of the first preferred embodiments that use the good crosscorrelations of the codes and rotate the codes frame by frame.

As shown in Figure 12, the choice of pilot symbols is critical to the performance of the system. The curves marked "Midamble (unbiased)" and "Midamble (matched filter)" give the performance of the conventional method of channel estimation. The curve marked "Pilot Symbols (Ones)" gives the performance if all pilot symbols are chosen with the value 1+j. The curve marked "Pilot Symbols (Deterministic)" gives the performance if a set of pilot symbols is chosen pseudo-randomly, but the sequence is repeated for all users. As Figure 12 shows, both of these methods are worse than the conventional method of channel estimation. The curve marked "Pilot Symbols (Random)" gives the performance if all the pilot symbols of all users are chosen pseudo-randomly. This is shown to give about a 1 dB improvement in performance at a bit error rate of 0.10.

The preferred embodiments assign pilot symbols in a pseudo-random fashion to reduce the cross-correlation effects in the TDD system and improve system performance. If there are 16 users and 16 pilot symbols per user, then 256 values must be chosen pseudo-randomly from the set {1+j, 1-j, -1+j, -1-j}. These pilot symbols assigned to a user correspond to the Walsh code assigned to that user. The user will then know the pilot sequence because it will either be stored in a table or the user will generate the same pilot sequence that is pseudo-randomly generated at the base station. Alternatively, the 256 values for pilot symbols can be chosen by any other means to make the sequences different for each user and to make them have good cross correlation properties. All that is required is that the pseudo-random properties are mimicked.

Preferred embodiments replace the midamble with simple pilot symbols. In the downlink, instead of a 256-chip midamble, 16 pilots with a spreading factor of 16 should be transmitted. Of course, the base station's scrambling code is still applied.

Based upon the raw BER simulations, the $E_b/N_o$ gain for replacing the midamble with 16 pilot symbols is between 0.2-1.0 dB, depending upon the delay path profile and the Doppler rate. In cases with favorable inter cell interference the capacity can be doubled from 8 to 16 users with the use of pilot symbols. The use of pilot symbols should allow vendors to implement interference cancellation schemes that can reach the capacity of 16 users for many channel conditions. Link level simulations evaluate the performance gains of using simple pilot symbols instead of the specially constructed midamble. The link level simulation parameters used are given in Table 7:

| The simulation parameters used to compare the performance of the midamble versus the performance with pilot symbols. | | |
| --- | --- | --- |
| | Vehicular | Indoor-to-outdoor pedestrian |
| Velocity | 120 kmph (Figure 13) | 3 kmph (Figure 14) |
| Spreading gain (SF) | 16 | 16 |
| Number of users | 8 | 8 |
| Midamble parameters | 256 chips, basic sequence is 192 chips | 256 chips, basic sequence is 192 chips |
| Midamble channel estimation | Circular convolution performed with FFT, Mult., and IFFT | Circular convolution performed with FFT, Mult., and IFFT |
| Pilot symbol parameters | 16 pilot symbols with spreading factor of 16 | 16 pilot symbols with spreading factor of 16 |
| Pilot symbol channel estimation | Average over 16 pilot symbols | Average over 16 pilot symbols |

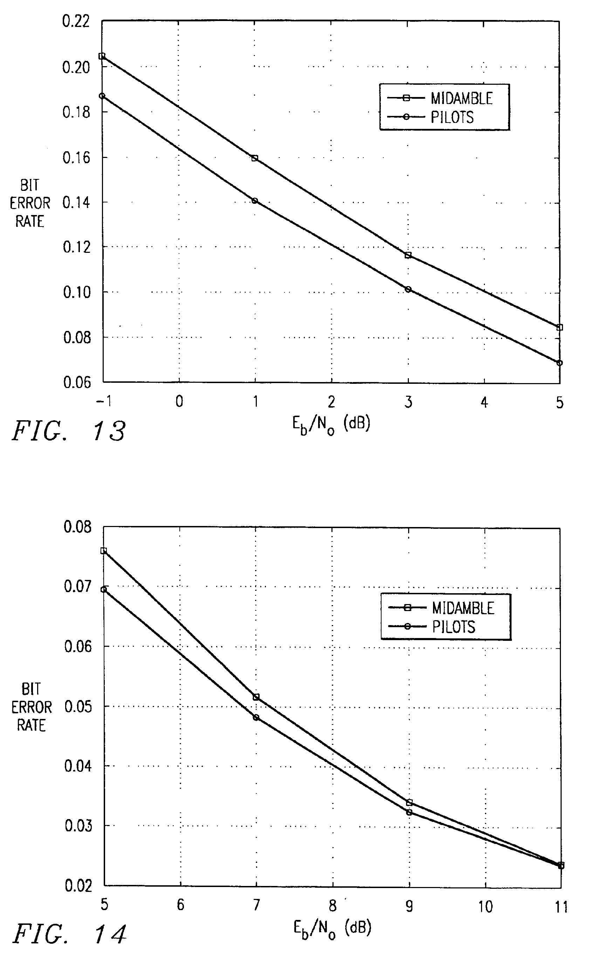

The performance with the Vehicular B channel is shown in Figure 13. With a spreading factor of 16 and with 8 users, the use of pilot symbols results in a 1.0 dB gain over the use of the midamble at a raw BER of 0.10. This is explained by the fact that the midamble uses a cyclic prefix of 64 chips and a basic sequence of length 192 chips. By discarding the cyclic prefix, the effective number of pilot symbols (with spreading gain of 16) is reduced from 16 to 12.

The performance with the Outdoor-to-Indoor and Pedestrian channel is shown in Figure 14. With a lower Doppler rate, the gain at a raw BER of 0.03 is about 0.2 dB. A lower target BER is used in this case because there is little time diversity at low Doppler to help improve the coded BER, so a lower raw BER is needed. Generally channel estimate performance worsens with higher Doppler rate, and the effect of throwing away pilot symbols is more apparent at higher Doppler rates

When multi-user detection is used at the mobile, the mobile estimates the channel for all the users in the cell which receive data in the same time slot. With 8 users, 8 separate channel estimates must be made. An analysis of the computational complexity of channel estimation with the midamble has been given. The calculations to determine computational complexity are summarized below. The mobile is assumed to receive information in one time slot per frame, so channel estimations must be made once per frame (100 times per second). Assuming that each complex operation in the FFT requires 4 instructions (4 multiply and accumulates), there are 4 (256) log2(256) = 8192 operations per FFT. There is both an FFT and IFFT required for the cyclic correlation, so the total number of operations required per second is

$$(2 \text{ FFT's})(100 \text{ frames})(8192 \text{ instructions}) = 1.638 \text{ MIPS}$$

The length of the basic sequence is of length 192, so an FFT of length 192 must be computed. The 192 length FFT may be computed using a method in which the 192 length FFT is broken down into smaller FFT's. Using the fact that 192 = 3*64 and letting X=3 and Y=64, the FFT can be performed with X FFT's of Y points plus Y FFT's of X points. The complexity estimate with this method is given as 1.38 MIPS.

Channel estimation with pilot symbols requires despreading the pilot symbols for each user and averaging over the 16 symbols within a time slot. Again, as with the midamble the mobile receives data on one time slot per frame. The Walsh-Hadamard Transform (WHT) can be used to despread all the Walsh codes efficiently. The complexity of the WHT is $16 \log_2(16)$ complex adds per symbol. There are 16 pilot symbols, so despreading requires (16 symbols)(16)(4)(2) = 2048 instructions per frame. Adding the despread symbols after removing the data modulation requires (8 users)(15 adds)(2 for complex) = 240 instructions per frame. If there are four fingers per user, the total computational complexity is (100 frames)(4 fingers)(2048+240) = 0.915 MIPS.

Channel estimation with the midamble actually requires 50% more computational complexity than channel estimation with the pilot symbols.

7. Modifications

The preferred embodiments may be modified in various ways while retaining the features discussed above. Pilot symbols with the same structure can be used in FDD systems which have a small spreading factor since the same impairments will be present in such a system. Similarly, the same pilot symbol structure can be used in a time division multiple access (TDMA) system.

**Claims**

1. A method of estimation by a mobile user in a multiple-user communication system, comprising:

   (a) receiving transmitted estimation sequences with each estimation sequence consisting of a symbol sequence modulating a periodic chip sequence wherein the chip sequence corresponds to a combination of a base station and a mobile user and the symbol sequence corresponds to the mobile user wherein the symbol sequences are pseudo-random;
   (b) decoding by a mobile user the symbol sequence modulated chip sequence corresponding to the mobile user; and
   (c) estimating from the results of step (b).

2. A method of estimation by a base station in a multiple-user communication system, comprising:

   (a) receiving transmitted estimation sequences with each estimation sequence consisting of a symbol sequence modulating a periodic chip sequence wherein the chip sequence corresponds to a combination of a base station and a mobile user and the symbol sequence corresponds to the mobile user wherein the symbol sequences are pseudo-random;
   (b) decoding the symbol sequence modulated chip sequence corresponding to each mobile user; and
   (c) estimating from the results of step (b).

3. A method of estimation in a multiple-user communication system, comprising:
   (a) transmitting estimation sequences with each estimation sequence consisting of a symbol sequence modulating a periodic chip sequence wherein the chip sequence corresponds to a combination of a base station and a mobile user and the symbol sequence corresponds to the mobile user wherein the symbol sequences are pseudo-random; whereby decoding the symbol sequence modulated chip sequence provides estimation.

4. A estimator for a multiple-user communication system, comprising:

   (a) an input for receiving transmitted n estimation sequences with each estimation sequence consisting of a symbol sequence of length m modulating a chip sequence of period k wherein the chip sequence corresponds to a combination of a base station and a mobile user and the symbol sequence corresponds to the mobile user wherein the symbol sequences are pseudo-random;
   (b) a sequence of k(m-1) delay elements coupled to said input;
   (c) n taps every k of said delay elements, said taps forming n sets of 1 tap every k delay elements with each set corresponding to one of the n symbol sequences, and for each set of taps logic elements and an adder to remove the symbol modulation; and
   (d) n sequences of k-1 delay elements with a tap every element, each of said n sequences coupled to one of said adders, and corresponding to one of said chip sequences and with logic elements and a second adder to remove the chip sequence;

(e) wherein the outputs of the second adders provide estimates for n users.

5. The estimator of claim 4, wherein:
   (a) said estimator includes a programmable processor and said delay elements are memory locations.

6. The estimator of claim 4, wherein:
   (a) k = 16 and m = 16.

7. The method of claim 1 or claim 2 or claim 3 or the estimator of claim 4, wherein:
   (a) said symbol sequences are shifts of an extended m-sequence.

8. The method of claim 7, wherein:
   (a) said symbol sequences also correspond to a base station, and users for the base station have symbol sequences selected from a single row of Table 4.

9. The method of claim 1 or claim 2 or claim 3 or the estimator of claim 4, wherein:
   (a) said chip sequences are products of scrambling codes corresponding to base stations and Gold-like codes corresponding to mobile users.

10. The method of claim 9, wherein:
    (a) said Gold-like codes rotate among frames.

11. The method of claim 1 or claim 2 or claim 3 or the estimator of claim 4, wherein:
    (a) said transmitted sequences are part of a time division duplex (TDD) mode of wideband code division multiple access (WCDMA) transmission.

12. The method of claim 1 or claim 2 or claim 3 or the estimator of claim 4, wherein:
    (a) said transmitted sequences are part of a time division multiple access (TDMA) transmission.

*FIG. 1*

|  | SYMBOL 1 | SYMBOL 2 | SYMBOL 3 |  | SYMBOL 16 |
|---|---|---|---|---|---|

PILOT SEQUENCE FOR USER 1

| $1+j$ | $-1-j$ | $-1-j$ |  | $1+j$ |
|---|---|---|---|---|
| SC | SC | SC | o o o | SC |
| GOLD 1 | GOLD 1 | GOLD 1 | o o o | GOLD 1 |

PILOT SEQUENCE FOR USER 2

| $-1-j$ | $-1-j$ | $-1-j$ |  | $1+j$ |
|---|---|---|---|---|
| SC | SC | SC | o o o | SC |
| GOLD 2 | GOLD 2 | GOLD 2 | o o o | GOLD 2 |

PILOT SEQUENCE FOR USER N

| $1+j$ | $1+j$ | $-1-j$ |  | $1+j$ |
|---|---|---|---|---|
| SC | SC | SC | o o o | SC |
| GOLD N | GOLD N | GOLD N | o o o | GOLD N |

*FIG. 3a*

PN SIGNAL

$L_1 T_1$

$T_1$

DATA SIGNAL

$+1$

$T_n$

$-1$

## FIG. 2

INFORMATION SEQUENCE → CHANNEL ENCODER → MODULATOR → CHANNEL → DEMODULATOR → CHANNEL DECODER → OUTPUT DATA

PSEUDO-RANDOM PATTERN GENERATOR → MODULATOR

PSEUDO-RANDOM PATTERN GENERATOR → DEMODULATOR

## FIG. 5

TO POWER CONTROL ← POWER ESTIMATION

DIVERSITY COMBINING

CODED SAMPLES

DEINTERLEAVING/ VITERBI DECODING ← (+) ← COHERENT DETECTION ← REFERENCE/ CODED SAMPLE EXTRACTION ← DEMODULATION/ DESPREADING

REFERENCE SAMPLES

CHANNEL ESTIMATION

CHANNEL ESTIMATE

DEMODULATOR 1

DEMODULATOR N

RECEIVER

*FIG. 3b*

= BASE TRANSCEIVER STATION (BTS)

MTSO = MOBILE TELEPHONE SWITCHING OFFICE

= MOBILE UNIT (MOBILE STATION)

------ = DEDICATED LINES

*FIG. 4*

FIG. 6

EP 1 063 780 A2

FIG. 7

FIG. 8

FIG. 9

FIG. 10

*FIG. 11*

*FIG. 12*

FIG. 13

FIG. 14